Europäisches Patentamt

European Patent Office

Office européen des brevets

(11) Veröffentlichungsnummer : **0 082 984**
**B1**

(12) **EUROPÄISCHE PATENTSCHRIFT**

(45) Veröffentlichungstag der Patentschrift :
05.03.86

(21) Anmeldenummer : 82111169.7

(22) Anmeldetag : 02.12.82

(51) Int. Cl.⁴ : **C 09 C   1/00**

(54) **Perlglanzpigmente mit verbesserter Lichtbeständigkeit, ihre Herstellung und Verwendung.**

(30) Priorität : 24.12.81 DE 3151355

(43) Veröffentlichungstag der Anmeldung :
06.07.83 Patentblatt 83/27

(45) Bekanntmachung des Hinweises auf die Patenterteilung : 05.03.86 Patentblatt 86/10

(84) Benannte Vertragsstaaten :
BE CH DE FR GB IT LI NL

(56) Entgegenhaltungen :
FR-A- 1 326 901
FR-A- 2 072 300

(73) Patentinhaber : Merck Patent Gesellschaft mit Beschränkter Haftung
Frankfurter Strasse 250
D-6100 Darmstadt (DE)

(72) Erfinder : Bernhard, Horst, Dr.
Haus Nr. 52
A-4164 Schwarzenberg (AT)

Jouve, 18, rue St-Denis, 75001 Paris, France

**Beschreibung**

Die Erfindung betrifft Perlglanzpigmente mit verbesserter Lichtbeständigkeit auf der Basis von mit Metalloxiden beschichteten Glimmerschuppen.

Eine Grundanforderung für diese Pigmente, insbesondere für eine Anwendung im Freien, ist eine ausreichende Licht- und Witterungsstabilität. Es sind schon eine Reihe von Verfahren vorgeschlagen worden, die die Lichtstabilität von solchen in der Regel mit $TiO_2$ beschichteten Glimmerschuppen verbessern sollen. So wird in der DOS 21 06 613 eine zusätzliche Behandlung der Pigmente mit Silicat vorgeschlagen, die nach der eigentlichen Beschichtung des Glimmers mit $TiO_2$ erfolgt. Nach der DOS 22 15 191 und der DOS 28 52 585 werden zur Lichtstabilisierung Außenüberzüge von Methacrylatochrom (III)-chlorid bzw. von Chromhydroxid aufgebracht.

Trotzdem bestand noch ein Bedürfnis nach Pigmenten, die zum einen eine bessere Lichtstabilität besitzen und die zum anderen auch einfacher herzustellen sind als die bekannten Pigmente, bei denen die Lichtstabilisierung in der Regel durch einen zusätzlichen Verfahrensschritt erzielt wird.

Es wurde nun gefunden, daß überraschenderweise dann sehr farbkräftige und insbesondere auch sehr lichtbeständige Pigmente erhalten werden, wenn man gleichzeitig mit dem Titanhydroxid auch Eisenhydroxid und Siliciumdioxid abscheidet, so daß sich eine Mischschicht bildet, in der nach dem Glühen $TiO_2$, $Fe_2O_3$ und $SiO_2$ in homogener Verteilung nebeneinander vorliegen.

Es hat sich gezeigt, daß der Zusatz von $Fe_2O_3$ allein oder von $SiO_2$ allein nicht die hervorragenden Resultate liefert, wie die Kombination von $SiO_2$ und $Fe_2O_3$.

Gegenstand der Erfindung sind daher Perlglanzpigmente mit verbesserter Lichtbeständigkeit auf der Basis von mit Metalloxiden beschichten Glimmerschuppen, die dadurch gekennzeichnet sind, daß die Metalloxid-Schicht als homogene Mischschicht ausgebildet ist, in der neben Titandioxid noch Siliciumdioxid und Eisenoxid vorliegen.

Gegenstand der Erfindung ist auch ein Verfahren zur Herstellung und die Verwendung dieser Pigmente.

Neben der sehr guten Lichtbeständigkeit liegt ein weiterer Vorteil der erfindungsgemäßen Pigmente in dem sehr einfachen Herstellungsverfahren. Während zur Herstellung von lichtstabilisierten Pigmenten nach dem Stand der Technik in der Regel nach dem Beschichten mit Titandioxid noch eine weitere Beschichtung mit einem schützenden Überzug notwendig ist, können die erfindungsgemäßen Pigmente in einem einstufigen Verfahren beschichtet werden.

Das Herstellungsverfahren orientiert sich dabei an bekannten Verfahren zur Herstellung von Perlglanzpigmenten, insbesondere dem im DBP 20 09 566 beschriebenen Verfahren. Dabei werden Glimmerschuppen, die in der Regel einen Durchmesser von etwa 5-200 μm und eine Dicke von etwa 0,1-5 μm besitzen, in einer wäßrigen Lösung suspendiert, die mit einer geeigneten Säure, wie z. B. Salzsäure oder Schwefelsäure auf einen pH-Wert von etwa 0,5-5, insbesondere etwa 1,5-2,5 gebracht wird. Zu dieser auf etwa 50-100 °C, vorzugsweise etwa 70-80 °C erhitzten Suspension, wird dann eine Titansalzlösung langsam zulaufen lassen, wobei durch gleichzeitige Zugabe einer Base der pH-Wert der Suspension weitgehend konstant gehalten wird. Bei dem erfindungsgemäßen Verfahren werden bevorzugt $TiCl_4$-Lösungen verwendet, die etwa 1-40 Gew. %, vorzugsweise etwa 5-30 Gew. % $TiCl_4$ enthalten. Im Gegensatz zum Verfahren des DBP 20 09 566 ist in der $TiCl_4$-Lösung jedoch zusätzlich noch ein Eisensalz enthalten. Dazu wird bevorzugt $FeCl_3$ verwendet, das in einer Menge von 0,02-30 Gew. %, vorzugsweise etwa 0,2-25 Gew. % enthalten ist.

Zur Aufrechterhaltung des pH-Wertes der Glimmersuspension wird in diesem Fall vorzugsweise eine Alkalilauge, insbesondere NaOH, verwendet, wobei diese Lösung das zusammen mit Titan- und Eisenhydroxid zu fällende $SiO_2$, bevorzugt als lösliches Alkalisilikat, enthält. Diese Lösung enthält in der Regel etwa 1-40 Gew. %, vorzugsweise etwa 0-35 Gew. %, NaOH und etwa 0,01-10 Gew. %, vorzugsweise etwa 0,1-8 Gew. %, Silikat, berechnet als $SiO_2$.

Die beiden Lösungen werden langsam so zugegeben, daß die in der Glimmersuspension durch Hydrolyse entstehenden Hydroxide bzw. Oxidaquate sich jeweils vollständig auf der Glimmeroberfläche abscheiden, ohne daß wesentliche Mengen von frei in der Suspension beweglichen Nebenprodukten entstehen. Die dabei zur Anwendung kommenden Zulaufgeschwindigkeiten sind so gewählt, daß pro Minute und pro m² zu belegender Oberfläche etwa 0,01-20 × 10⁻⁵ Mol an auszufällenden Salzen zugeführt wird. Je nach der gewünschten Dicke der Beschichtung werden dabei Beschichtungszeiten von mehreren Stunden bis zu mehreren Tagen benötigt.

Die Beschichtungslösungen können gegebenenfalls noch weitere Zusätze enthalten. So hat sich z. B. ein Zusatz von $AlCl_3$ zur $TiCl_4$ und $FeCl_3$ enthaltenden Lösung, das bei der Beschichtung als $Al(OH)_3$ mit ausfällt, als vorteilhaft erwiesen. Falls ein solcher Zusatz verwendet wird, wird $AlCl_3$ in einer Menge von etwa 0,1-15 Gew. %, vorzugsweise etwa 0,2-10 Gew. % eingesetzt.

Eisensalze werden in einer solchen Menge eingesetzt, daß sich in der Metalloxidschicht ein Eisengehalt, berechnet als $Fe_2O_3$, von etwa 0,1-60 Gewichtsprozent, vorzugsweise von etwa 1-30 Gew. % und insbesondere von etwa 2-20 Gew. % ergibt. Silikate und Aluminiumsalze werden so dosiert, daß sich in der Metalloxidschicht jeweils ein Gehalt von 0,1-20, vorzugsweise von etwa 1-10 Gew. %, bezogen auf $SiO_2$ und $Al_2O_3$, ergibt. $Fe_2O_3$ und $SiO_2$ gemeinsam stellen etwa 0,2-70, vorzugsweise 2-40 und insbesondere 5-30 Gew. % der Metalloxidschicht dar.

Nach Erreichen der gewünschten Schichtdicke bzw. der gewünschten Interferenzfarbe wird die Beschichtung beendet und die Pigmente werden analog den üblichen Verfahren abgetrennt, gewaschen, getrocknet und geglüht. Zum Glühen werden Temperaturen von etwa 500-1 000 °C, insbesondere von 700-1 000 °C angewendet, wobei die gefällten Metallhydroxide bzw. Oxidaquate entwässert werden und in die entsprechenden Oxide übergehen.

Durch Variation der Dicke der Beschichtung können beliebige Interferenzfarben erster oder auch höherer Ordnung erreicht werden. Durch das mit ausgefällte $Fe_2O_3$ bekommt das Pigment zusätzlich je nach der verwendeten Menge an Eisensalz eine mehr oder weniger ausgeprägte Eigenfarbe. Diese rötlich-braune Eigenfarbe ergibt, insbesondere zusammen mit einer gelben Interferenzfarbe sehr schöne intensive Goldtöne, die deshalb im Zusammenhang mit der vorliegenden Erfindung besonders bevorzugt sind.

Die nach der Erfindung erhaltenen Pigmente besitzen eine deutlich verbesserte Lichtstabilität, so daß durch die Erfindung wertvolle neue Pigmente zur Verfügung gestellt werden. Die erfindungsgemäßen Pigmente können wie die bisher bekannten, verwendet werden, also z. B. zur Pigmentierung von Kunststoffen, Farben oder Lacken aber insbesondere auch in Körperpflegemitteln und Kosmetika. Durch die verbesserte Lichtechtheit sind auch alle Anwendungen bevorzugt, bei denen die Pigmente in verstärktem Maße Umwelteinflüssen ausgesetzt sind, insbesondere z. B. in Autolacken.

Beispiel 1

Eine Suspension von 45 g Kaliglimmer mit einer Plättchengröße zwischen 10 und 70 μm in 1,5 l Wasser wird durch Zugabe einer 10 %igen $TiCl_4$-Lösung auf einen pH-Wert von 2,2 eingestellt und auf 75 °C erhitzt. Dann werden langsam sowohl eine Lösung, die 10 Gew. % $TiCl_4$ und 1,4 Gew. % $FeCl_3$ enthält, als auch eine Lösung, die 10 Gew. % NaOH und 0,5 Gew. % $SiO_2$ (als Natriumsilicat) enthält, so zudosiert, daß der pH-Wert von 2,2 eingehalten wird. Nach Erreichen der gewünschten gelben Interferenzfarbe wird die Beschichtung abgebrochen, das Pigment abfiltriert, mit Wasser gewaschen, getrocknet und 30 Minuten bei 850 °C geglüht.

Das Präparat zeigt eine kräftig goldene Glanz- und Pulverfarbe. Nach 24stündiger Belichtungszeit in einem Photo-aktivitätstest zeigen die in PVC eingearbeiteten Pigmente keinerlei Farbveränderung, während ein Vergleichspräparat, das nur $Fe_2O_3$, nicht jedoch die erfindungsgemäße Kombination von $Fe_2O_3$ und $SiO_2$ in der $TiO_2$-Schicht enthält, deutliche Veränderungen zeigt.

Beispiel 2

Eine Suspension von 45 g Kaliglimmer mit einer Plättchengröße zwischen 10 und 70 μm in 1,5 l Wasser wird mit 10 %iger $TiCl_4$-Lösung auf einen pH-Wert von 2,3 eingestellt und auf 75 °C erhitzt. Dann werden langsam sowohl eine Lösung, die 10 Gew. % $TiCl_4$, 1 Gew. % $FeCl_3$ und 0,75 Gew. % $AlCl_3$ enthält, als auch eine Lösung, die 10 Gew. % NaOH und 0,38 Gew. % $SiO_2$ (als Natriumsilicat) enthält, so zudosiert, daß der pH-Wert zwischen 2,1 und 2,3 gehalten wird. Nach Erreichen der gewünschten gelben Interferenzfarbe wird die Beschichtung abgebrochen, das Pigment abfiltriert, gewaschen, bei 110 °C getrocknet und 30 Minuten bei 800 °C geglüht.

Das Präparat zeigt eine kräftig goldene Glanz- und Pulverfarbe. Nach 24stündiger Belichtungszeit in einem Photo-aktivitätstest zeigen die in PVC eingearbeiteten Pigmente keinerlei Farbveränderung, während ein Vergleichspräparat, das nur $Fe_2O_3$, nicht jedoch die erfindungsgemäße Kombination von $Fe_2O_3$ und $SiO_2$ in der $TiO_2$-Schicht enthält, deutliche Veränderungen zeigt.

**Patentansprüche**

1. Perlglanzpigmente mit verbesserter Lichtbeständigkeit auf der Basis von mit Metalloxiden beschichteten Glimmerschuppen, dadurch gekennzeichnet, daß die Metalloxid-Schicht als homogene Mischschicht ausgebildet ist, in der neben Titandioxid noch Siliciumdioxid und Eisenoxid vorliegen.

2. Perlglanzpigmente nach Anspruch 1, dadurch gekennzeichnet, daß der Gehalt des $SiO_2$ in der Metalloxid-Schicht etwa 0,1 bis etwa 20 Gew. % und der Gehalt des $Fe_2O_3$ in der Metalloxid-Schicht etwa 0,1 bis etwa 60 Gew. % beträgt.

3. Perlglanzpigmente nach Anspruch 1 oder 2, dadurch gekennzeichnet, daß die Metalloxid-Schicht zusätzlich $Al_2O_3$ in einer Menge von etwa 0,1 bis etwa 20 Gew. % enthält.

4. Verfahren zur Herstellung von Perlglanzpigmenten mit verbesserter Lichtbeständigkeit auf der Basis von mit Metalloxiden beschichteten Glimmerschuppen, wobei Glimmer in wäßriger Suspension mit einer Titandioxidaquat-Schicht belegt und danach gewaschen, getrocknet und geglüht wird, dadurch gekennzeichnet, daß zusammen mit dem Titandioxidaquat Eisenhydroxid und Siliciumdioxid als einheitliche Schicht aufgefällt werden.

5. Verfahren nach Anspruch 4, dadurch gekennzeichnet, daß Eisen und Silicium in einer Menge von etwa 0,2 bis etwa 70 Gew. %, bezogen auf die Metalloxid-Schicht und bezogen auf das nach dem Glühen vorliegende $Fe_2O_3$ und $SiO_2$, mit ausgefällt werden.

6. Verfahren nach Anspruch 4 oder 5, dadurch gekennzeichnet, daß zusätzlich noch Aluminiumhydroxid in einer Menge von etwa 0,1 bis etwa 20 Gew. % bezogen auf $Al_2O_3$ mit ausgefällt wird.

7. Verfahren nach Anspruch 4 oder 5, dadurch gekennzeichnet, daß man zu einer wäßrigen Glimmersuspension gleichzeitig eine Lösung, die etwa 1 bis etwa 40 Gew. % $TiCl_4$ und etwa 0,02 bis etwa 30 Gew. % $FeCl_3$ enthält und eine weitere Lösung, die etwa 0,01 bis etwa 10 Gew. % Silicat, berechnet als $SiO_2$, enthält, zulaufen läßt, wobei man den pH-Wert der Suspension weitgehend konstant hält, nach Erreichen der gewünschten Interferenzfarbe die Beschichtung abbricht, das Pigment abtrennt, wäscht, trocknet und glüht.

8. Verfahren nach einem der Anprüche 4 bis 7, dadurch gekennzeichnet, daß in der ersten Lösung neben $TiCl_4$ und $FeCl_3$ noch etwa 0,1 bis etwa 15 Gew. % $AlCl_3$ enthalten sind.

9. Verwendung der Perlglanzpigmente nach Anspruch 1 zur Pigmentierung von Kunststoffen, Lacken, Farben und Körperpflegemitteln.

## Claims

1. Nacreous pigments having improved light fastness and based on mica flakes coated with metal oxides, characterised in that the metal oxide layer is formed as a homogeneous mixed layer in which, in addition to titanium dioxide, silicon dioxide and iron oxide are also present.

2. Nacreous pigments according to Claim 1, characterised in that the content of $SiO_2$ in the metal oxide layer is about 0.1 to about 20 per cent by weight and the content of $Fe_2O_3$ in the metal oxide layer is about 0.1 to about 60 per cent by weight.

3. Nacreous pigments according to Claim 1 or 2, characterised in that the metal oxide layer additionally contains $Al_2O_3$ in an amount of about 0.1 to about 20 per cent by weight.

4. Process for preparing nacreous pigments having improved light fastness and based on mica flakes coated with metal oxides, the mica being coated in an aqueous suspension with a titanium dioxide hydrate layer and then washed, dried and calcined, characterised in that iron hydroxide and silicon dioxide are precipitated as a uniform layer together with the titanium dioxide hydrate.

5. Process according to Claim 4, characterised in that iron and silicon are co-precipitated in an amount of about 0.2 to about 70 per cent by weight, relative to the metal oxide layer and relative to $Fe_2O_3$ and $SiO_2$ present after the calcination.

6. Process according to Claim 4 or 5, characterised in that aluminium hydroxide is additionally coprecipitated in an amount of about 0.1 to about 20 per cent by weight, relative to $Al_2O_3$.

7. Process according to Claim 4 or 5, characterised in that a solution containing about 1 to about 40 per cent by weight of $TiCl_4$ and about 0.02 to about 30 per cent by weight of $FeCl_3$ and a further solution containing about 0.01 to about 10 per cent by weight of silicate, calculated as $SiO_2$, are allowed to flow simultaneously into an aqueous mica suspension the pH of which is largely maintained at a constant value, the coating process is discontinued after the interference colour desired has been reached, and the pigment is separated off, washed, dried and calcined.

8. Process according to any one of Claims 4 to 7, characterised in that the first solution, in addition to $TiCl_4$ and $FeCl_3$, also contains about 0.1 to about 15 per cent by weight of $AlCl_3$.

9. Use of nacreous pigments according to Claim 1, for pigmenting plastics, lacquers, paints and toiletries.

## Revendications

1. Pigments d'un lustre nacré ayant une meilleure solidité à la lumière et à base d'écailles de mica enduites d'oxydes métalliques, caractérisés en ce que la couche d'oxydes métalliques est réalisée sous forme d'une couche mixte homogène dans laquelle, outre le dioxyde de titane, il y a encore du dioxyde de silicium et de l'oxyde de fer.

2. Pigments d'un lustre nacré selon la revendication 1, caractérisés en ce que la teneur du $SiO_2$ dans la couche d'oxydes métalliques s'élève d'environ 0,1 à environ 20 % en poids, tandis que la teneur du $Fe_2O_3$ dans la couche d'oxydes métalliques s'élève d'environ 0,1 à environ 60 % en poids.

3. Pigments d'un lustre nacré selon la revendication 1 ou 2, caractérisés en ce que la couche d'oxydes métalliques contient, en outre, de l'$Al_2O_3$ en une quantité d'environ 0,1 à environ 20 % en poids.

4. Procédé de fabrication de pigments d'un lustre nacré ayant une meilleure solidité à la lumière, à base d'écailles de mica enduites d'oxydes métalliques, le mica en suspension aqueuse étant revêtu d'une couche de dioxyde de titane hydraté, pour être ensuite lavé, séché et calciné, caractérisé en ce que, conjointement avec le dioxyde de titane hydraté, on précipite de l'hydroxyde de fer et du dioxyde de silicium sous forme d'une couche homogène.

5. Procédé selon la revendication 4, caractérisé en ce qu'on précipite ensemble le fer et le silicium en une quantité d'environ 0,2 à environ 70 % en poids, calculé sur la couche d'oxydes métalliques, ainsi que sur le $Fe_2O_3$ et le $SiO_2$ présents après la calcination.

6. Procédé selon la revendication 4 ou 5, caractérisé en ce qu'on précipite, en plus, de l'hydroxyde d'aluminium en une quantité d'environ 0,1 à environ 20 % en poids, calculé sur $Al_2O_3$.

7. Procédé selon la revendication 4 ou 5, caractérisé en ce que, à une suspension aqueuse de mica, on ajoute simultanément une solution contenant environ 1 à environ 40 % en poids de $TiCl_4$ et environ 0,02 à environ 30 % en poids de $FeCl_3$, ainsi qu'une autre solution contenant environ 0,01 à environ 10 % en poids de silicate, calculé en $SiO_2$, le pH de la suspension étant maintenu essentiellement constant tandis que, après avoir atteint la frange d'interférence désirée, on interrompt l'enduction, on sépare le pigment, on le lave, on le sèche et on le calcine.

8. Procédé selon une des revendications 4 à 7, caractérisé en ce que, outre TiCl$_4$ et FeCl$_3$, la première solution contient encore environ 0,1 à environ 15 % en poids d'AlCl$_3$.

9. Utilisation de pigments d'un lustre nacré selon la revendication 1 pour la pigmentation des matières synthétiques, des vernis, des couleurs et des agents pour les soins corporels.